# EUROPEAN PATENT APPLICATION

(11) **EP 3 613 988 A1**
(43) Date of publication of application: **26.02.2020**
(21) Application number: 18788648.6
(22) Date of filing: 11.04.2018
(51) Int. Cl.: F04D 19/04, F16C 32/04

(54) **VACUUM PUMP, AND MAGNETIC BEARING UNIT AND SHAFT PROVIDED IN VACUUM PUMP**

(30) Priority: 18.04.2017 JP 2017081992
(71) Applicant: Edwards Japan Limited, Yachiyo-shi, Chiba 276-8523 (JP)
(72) Inventor: SHI, Yongwei, Yachiyo-shi Chiba 276-8523 (JP); MIWATA, Tooru, Yachiyo-shi Chiba 276-8523 (JP); SAKAGUCHI, Yoshiyuki, Yachiyo-shi Chiba 276-8523 (JP)
(74) Representative: Norton, Ian Andrew
(86) International application number: PCT/JP2018/015284
(87) International publication number: WO 2018/193943

(57) **Abstract**

To realize a vacuum pump, the overall height of which can be reduced, and a magnetic bearing portion and a shaft that are provided in the vacuum pump. In the present embodiment, the lower Ra sensor target, the fourth spacer, and the Ra electromagnetic target are configured in this order, from the inlet port side toward the outlet port side, at the lower side of the shaft of the 5-axis control magnetic bearing. Likewise, at the lower side of the stator, the lower Ra sensor and the lower Ra electromagnet are configured in this order, from the inlet port toward the outlet port. In other words, the lower Ra sensor is disposed above the lower Ra electromagnet. According to this configuration, the third spacer fixed above the lower Ra sensor target can be shortened, thereby reducing the length of the shaft. As a result, the height of the 5-axis control magnetic bearing and the length of the stator column enclosing electrical components constituting the 5-axis control magnetic bearing can be reduced, thereby reducing the overall height of the vacuum pump.

## Description

The present invention relates to a vacuum pump, and a magnetic bearing portion and a shaft that are provided in the vacuum pump. More specifically, the present invention relates to a structure for reducing the overall height of a vacuum pump.

Next-generation semiconductor devices in which a vacuum pump is provided have become larger and larger in recent years. However, there is a limit to the size of a room for storing a next-generation semiconductor device and a vacuum pump disposed in the semiconductor device. For this reason, there exists a market demand to downsize or reduce the overall height of the vacuum pump to be disposed in the next-generation semiconductor device, rather than downsizing the next-generation semiconductor device that has become larger and larger.

A high-performance and highly reliable magnetic bearing turbomolecular pump is frequently used for exhaust of a semiconductor manufacturing apparatus. One of the aspects of the magnetic bearing turbomolecular pump in which a shaft is magnetically levitated and held in a non-contact manner by an electromagnet fixed to a stator is that the overall height of the magnetic bearing turbomolecular pump is constrained by the height of the magnetic bearing and the height of the shaft.

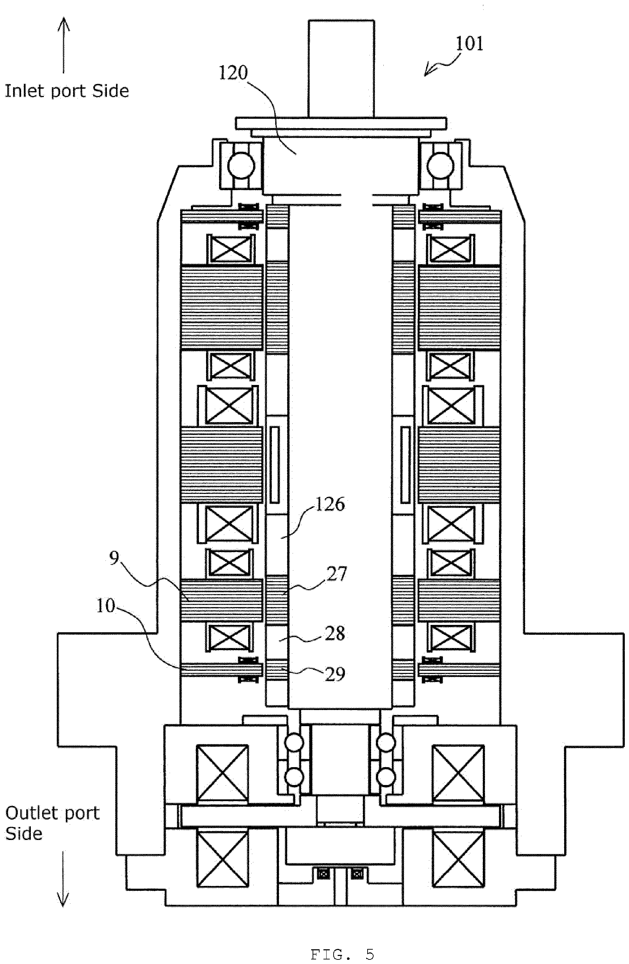

FIG. 5 is a diagram for explaining a magnetic bearing 101 (5-axis control magnetic bearing) of the prior art.

In the magnetic bearing 101 of the prior art in which a shaft core rod 120 is supported in a rotatable manner, a third spacer 126, a lower Ra (radial) electromagnetic target 27, a fourth spacer 28, and a lower Ra sensor target 29 are arranged in this order, from the inlet port side toward the outlet port side, at the lower side (the outlet port side) of the shaft.

Furthermore, at the lower side of the stator, a lower Ra electromagnet 9 (paired with the lower Ra electromagnetic target 27) and a lower Ra sensor 10 (paired with the lower Ra sensor target 29) are arranged in this order.
[PTL 1]
   Japanese Patent Application Publication No. 2000-283161
[PTL 2]
   Japanese Patent No. 5785494

Generally, the overall height of a turbomolecular pump can be reduced by reducing (shortening) the height (length) of the shaft.

However, it has been difficult to reduce the height of a magnetic bearing (magnetic bearing portion) without changing sensors and electromagnets constituting the magnetic bearing, as well as the motor, and without impairing the support capability of the magnetic bearing.

Therefore, an object of the present invention is to realize a vacuum pump, the overall height of which can be reduced without impairing the support capability of a magnetic bearing, and a magnetic bearing portion and a shaft that are provided in the vacuum pump.

An invention described in claim 1 provides a vacuum pump, having a housing in which an inlet port and an outlet port are formed, a shaft enclosed in the housing, a magnetic bearing portion that is composed of a radial electromagnetic target fixed at a predetermined position on the shaft, a radial electromagnet facing the radial electromagnetic target with a predetermined gap therebetween, a radial sensor target fixed at a predetermined position on the shaft, and a radial sensor facing the radial sensor target with a predetermined gap therebetween, and rotatably supports the shaft, a motor that is composed of a shaft-side motor portion fixed at a predetermined position on the shaft and a housing-side motor portion facing the shaft-side motor portion with a predetermined gap therebetween, and rotates the shaft, and a rotating portion disposed on the shaft and rotated by the motor together with the shaft, wherein the vacuum pump transfers a gas sucked from the inlet port to the outlet port by rotating the rotating portion at a high speed, and the radial sensor target and the radial electromagnetic target are arranged in this order from the inlet port side toward the outlet port side of the shaft, at the outlet port side of the magnetic bearing portion relative to a position where the shaft-side motor portion is disposed.

An invention described in claim 2 provides the vacuum pump described in claim 1, wherein the magnetic bearing portion has a first spacer fixed on the inlet port side of the radial sensor target and a second spacer fixed between the radial sensor target and the radial electromagnetic target.

An invention described in claim 3 provides the vacuum pump described in claim 2, wherein at least the first spacer or the second spacer is formed of a laminated steel plate.

An invention described in claim 4 provides the vacuum pump described in at least any one of claims 1 to 3, wherein the motor has a shield structure at a side of the housing-side motor portion so as to face the radial sensor.

An invention described in claim 5 provides the vacuum pump described in at least any one of claims 1 to 4, wherein the radial sensor is an inductance-type displacement sensor.

An invention described in claim 6 provides a magnetic bearing portion provided in the vacuum pump described in at least any one of claims 1 to 5.

An invention described in claim 7 provides a shaft provided in the vacuum pump described in at least any one of claims 1 to 5.

According to the present invention, the height of the magnetic bearing can be reduced by shortening the shaft disposed in the vacuum pump, and as a result the overall height of the vacuum pump can be reduced. The present invention can also prevent impairment of the control capability of the magnetic bearing even if the shaft is shortened.
FIG. 1 is a diagram showing an example of a schematic configuration of a vacuum pump according to an embodiment of the present invention;
FIG. 2 is a diagram for explaining a magnetic bearing according to the embodiment of the present invention;
FIG. 3 is a structural comparison diagram for explaining the embodiment of the present invention;
FIG. 4 is a diagram showing an example of a schematic configuration of a shield structure according to a modification of the present invention; and
FIG. 5 is a diagram for explaining a magnetic bearing according to the prior art.

### (i) Outline of Embodiment

In the present embodiment, an order in which the Ra electromagnetic target and the lower Ra sensor target are arranged at the lower side of the shaft of the 5-axis control magnetic bearing of the prior art is swapped (inevitably, the order in which the lower Ra electromagnet and the lower Ra sensor that are paired with the Ra electromagnetic target and the lower Ra sensor target at the stator side are arranged is swapped as well).

Specifically, at the lower side of the shaft in the 5-axis control magnetic bearing of the present embodiment, the lower Ra sensor target, the fourth spacer (i.e., the configuration corresponding to the second spacer of the present invention), and the Ra electromagnetic target are configured in this order, from the inlet port toward the outlet port. Likewise, at the lower side of the stator, the lower Ra sensor and the lower Ra electromagnet are configured in this order, from the inlet port toward the outlet port.

In other words, the lower Ra sensor is disposed above the lower Ra electromagnet.

According to this configuration, a third spacer fixed above the lower Ra sensor target (i.e., the configuration corresponding to the first spacer of the present invention) can be shortened, thereby reducing the length of the shaft.

As a result, the height of the 5-axis control magnetic bearing and the length of a stator column enclosing electrical components constituting the 5-axis control magnetic bearing can be reduced, thereby reducing the overall height of the vacuum pump.

### (ii) Details of Embodiment

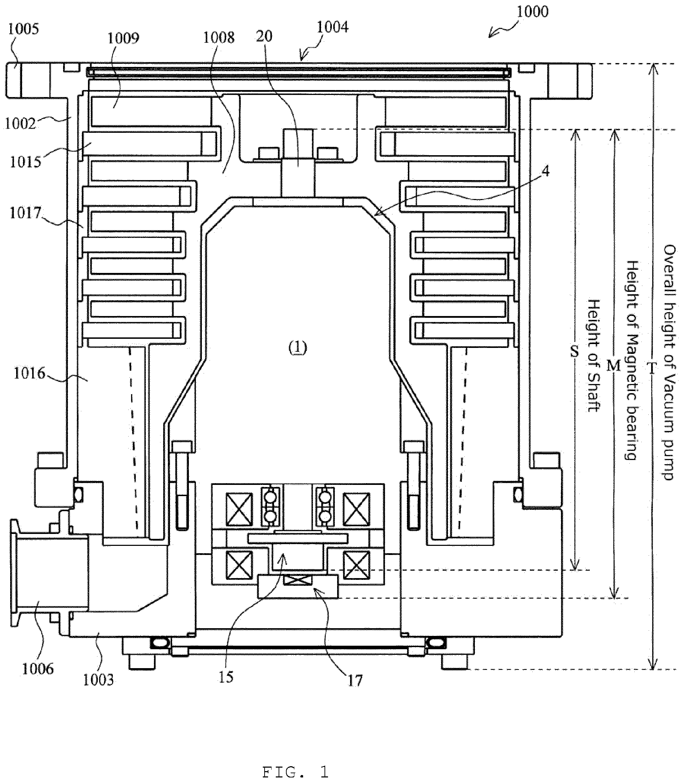

A preferred embodiment of the invention will be described hereinafter in detail with reference to FIGS. 1 to 4.

### Configuration of Vacuum Pump 1000

FIG. 1 is a diagram showing an example of a schematic configuration of a vacuum pump 1000 according to the embodiment of the present invention, the diagram showing a cross section of the vacuum pump 1000 taken along an axial direction.

First, the vacuum pump 1000 according to the present embodiment is explained.

The vacuum pump 1000 of the present embodiment is a so-called compound molecular pump having a turbomolecular pump portion and a thread groove pump portion.

A casing 1002 configuring a housing of the vacuum pump 1000 has a substantially cylindrical shape and constitutes a frame of the vacuum pump 1000 together with a base 1003 provided in a lower portion of the casing 1002 (outlet port 1006 side).

A gas transfer mechanism, which is a structure bringing about an exhaust function of the vacuum pump 1000, is stored inside the frame of the vacuum pump 1000.

This gas transfer mechanism is composed mainly of a rotating portion supported rotatably and a stator portion fixed to the frame of the vacuum pump 1000.

An inlet port 1004 for introducing gas into the vacuum pump 1000 is formed at an end portion of the casing 1002. A flange portion 1005 protruding toward an outer periphery of the casing 1002 is formed on an end surface of the casing 1002 at the inlet port 1004 side.

The outlet port 1006 for exhausting the gas from the vacuum pump 1000 is formed in the base 1003.

Also, a cooling pipe (water-cooling pipe) composed of a tube (pipe)-like member is embedded in the base 1003 for the purpose of reducing the impact of heat that a control device receives from the vacuum pump 1000. Therefore, the temperature of the base 1003 is controlled. This cooling pipe is a member configured to cool the periphery thereof by allowing a coolant, which is a heat medium, to flow therein and causing this coolant to absorb the heat.

The rotating portion includes a shaft core rod 20 which is a rotating shaft, a rotor 1008 disposed on the shaft core rod 20, a plurality of rotor blades 1009 provided on the rotor 1008, and the like. Note that the shaft core rod 20 and the rotor 1008 constitute a rotor portion.

The rotor blades 1009 are formed of blades extending radially from the shaft core rod 20 at a predetermined angle from a plane perpendicular to an axis of the shaft core rod 20.

A magnetic bearing (magnetic bearing 1) that includes a motor for rotating the shaft core rod 20 and the rotating portion at high speeds is provided in the shaft core rod 20 and enclosed in a stator column 4. Note that the magnetic bearing (1) will be described later.

The stator portion (stator cylindrical portion) is formed on an inner periphery side of the frame (casing 1002) of the vacuum pump 1000. The stator portion is composed of a plurality of stator blades 1015 provided on the inlet port 1004 side (turbomolecular pump portion), a thread groove spacer 1016 (thread groove pump portion) provided on an inner peripheral surface of the casing 1002, and the like.

The stator blades 1015 are composed of blades extending from an inner peripheral surface of the frame of the vacuum pump 1000 toward the shaft core rod 20, at a predetermined angle from the plane perpendicular to the axis of the shaft core rod 20.

The stator blades 1015 in respective stages are separated by cylindrical spacers 1017 and fixed.

In the vacuum pump 1000, the stator blades 1015 are formed in a plurality of stages so as to alternate with the rotor blades 1009 along the axial direction.

Spiral grooves are formed on an opposed surface of the thread groove spacer 1016 that faces the rotor 1008. The thread groove spacer 1016 is configured to face an outer peripheral surface of the rotor 1008, with a predetermined clearance (space) therebetween. The direction of the spiral grooves formed in the thread groove spacer 1016 is the direction toward the outlet port 1006 when the gas is transported through the spiral grooves in the direction of rotation of the rotor 1008. Note that it is acceptable if the spiral grooves are provided in at least one of opposed surfaces on the rotating portion side and the stator portion side.

The depth of the spiral grooves becomes shallower toward the outlet port 1006, and therefore the gas transported through the spiral grooves is configured to be compressed as the gas approaches the outlet port 1006.

The vacuum pump 1000 configured as described above performs vacuum exhaust processing in a vacuum chamber (not shown) disposed in the vacuum pump 1000. The vacuum chamber is a vacuum device used as, for example, a chamber or the like of a semiconductor manufacturing apparatus, a surface analyzer, or a microfabrication apparatus.

In the present embodiment, the terms "height S of the shaft", "height M of the magnetic bearing", and "overall height T of the vacuum pump" are described as corresponding to the sections described below.

The height S of the shaft corresponds to the length between an upper end of the shaft core rod 20 at the inlet port 1004 side and a lower end of an Ax sensor target 15 at the outlet port 1006 side.

The height M of the magnetic bearing corresponds to the length between the upper end of the shaft core rod 20 at the inlet port 1004 side and a lower end of an Ax (axial) sensor 17 at the outlet port 1006 side.

The height T of the vacuum pump corresponds to the length between an upper end of the inlet port 1004 and a lower end of the vacuum pump 1000.

### Configuration of Magnetic Bearing 1

A configuration of the magnetic bearing 1 (5-axis control magnetic bearing) that is disposed in the vacuum pump 1000 having the foregoing configuration will be described next.

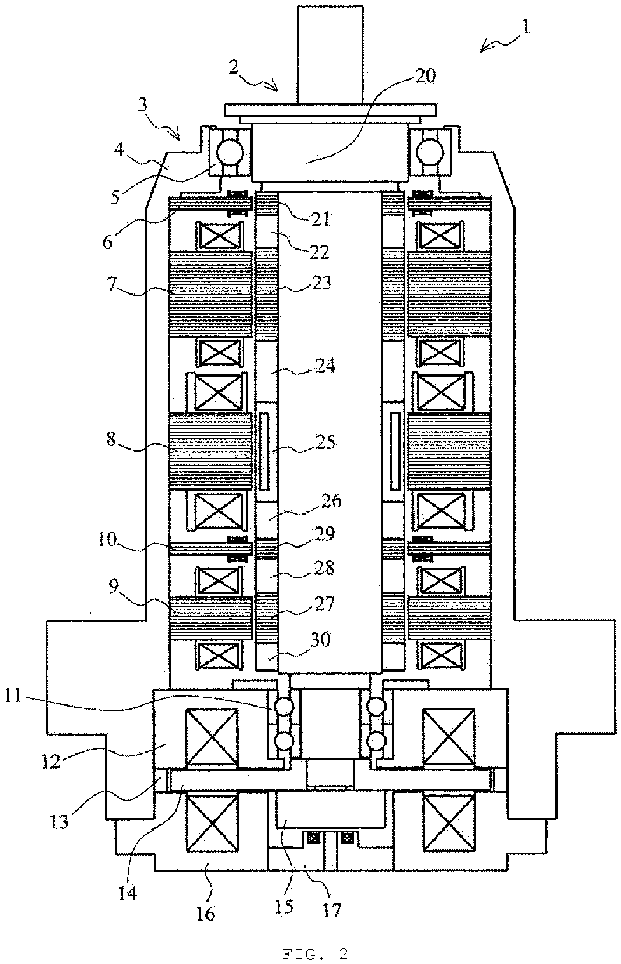

FIG. 2 is a diagram for explaining the magnetic bearing 1 according to the embodiment of the present invention.

The magnetic bearing 1 is composed mainly of a shaft assembly 2 and a stator assembly 3, wherein a portion other than a part of the shaft core rod 20 at the inlet port 1004 side is enclosed in the stator column 4.

The shaft assembly 2 is composed of the shaft core rod 20, as well as an upper Ra sensor target 21, a first spacer 22, an upper Ra electromagnetic target 23, a second spacer 24, a shaft-side motor 25, a third spacer 26 (corresponding to the first spacer of the present invention), a lower Ra sensor target 29, a fourth spacer 28 (corresponding to the second spacer of the present invention), a lower Ra electromagnetic target 27, and a holder 30, which are fixed to the shaft core rod 20, by being arranged in this order, from the inlet port 1004 side toward the outlet port 1006 side.

The stator assembly 3 is composed of an upper protective bearing 5, an upper Ra sensor 6, an upper Ra electromagnet 7, a stator-side motor 8, a lower Ra sensor 10, a lower Ra electromagnet 9, a lower protective bearing 11, an upper Ax electromagnet 12, an Ax spacer 13, an armature disc 14, an Ax sensor target 15, a lower Ax electromagnet 16, and an Ax sensor 17 arranged in this order, from the inlet port 1004 side toward the outlet port 1006 side.

Each of the foregoing configurations will be described specifically hereinafter.

A motor for rotating the shaft core rod 20 at high speeds is provided in the middle of the shaft core rod 20 in the axial direction thereof. The motor is composed of the stator-side motor 8 and the shaft-side motor 25.

Furthermore, as a radial magnetic bearing device for supporting the shaft core rod 20 in a radial direction (Ra direction) in a non-contact manner, the upper Ra electromagnet 7 and the upper Ra electromagnetic target 23 are provided on the inlet port 1004 side relative to the motor (the stator-side motor 8 and the shaft-side motor 25). On the other hand, a pair of the lower Ra electromagnets 9 and a pair of the lower Ra electromagnetic targets 27 are provided on the outlet port 1006 side relative to the motor. Each of the electromagnetic targets (23, 27) is fixed to the shaft core rod 20. The magnetic force of the electromagnets of these two pairs (electromagnets and electromagnetic targets) of radial magnetic bearing devices attract the shaft core rod 20.

Note that, although FIG. 2 illustrates the configuration on the left side of the configuration of the magnetic bearing 1 with respect to the centerline of the shaft core rod 20, the right side has the same configuration. In other words, in the magnetic bearing 1, four electromagnets are arranged around the shaft core rod 20 in such a manner as to face each other at 90 degrees with a predetermined clearance.

The upper Ra sensor 6, the upper Ra sensor target 21, the lower Ra sensor 10, and the lower Ra sensor target 29 are elements that detect radial displacement of the shaft core rod 20, and the sensors are each configured with, for example, a coil. The coil is a part of an oscillator circuit that is formed in a control unit (not shown) installed outside the vacuum pump 1000, wherein a high-frequency current flows as the oscillator circuit oscillates, to generate a high-frequency magnetic field in the shaft core rod 20. In other words, for example, the oscillation amplitude changes when the distance between the upper Ra sensor 6 and the upper Ra sensor target 21 changes, so that the displacement of the shaft core rod 20 can be detected.

Normally, an inductance-type or eddy current-type displacement sensor is used as the non-contact type upper Ra sensor 6, but in this embodiment an inductance-type displacement sensor is used for the purpose of reducing variations in output signals caused by individual differences and installation conditions of the upper Ra sensor target 21.

Once the control unit detects radial displacement of the shaft core rod 20 on the basis of signals from the upper Ra sensor 6 and the lower Ra sensor 10, the control unit adjusts the magnetic force of each of the electromagnets described above, to bring the shaft core rod 20 back to a predetermined position.

Next, as an axis magnetic bearing device for supporting the shaft core rod 20 in an axial direction (axial direction/Ax direction) in a non-contact manner, the upper Ax electromagnet 12, the lower Ax electromagnet 16, the armature disc 14, the Ax sensor target 15, and the Ax sensor 17 are provided on the outlet port 1006 side relative to the shaft core rod 20.

The armature disc 14 is fixed vertically to the shaft core rod 20, and has the upper Ax electromagnet 12 disposed thereon and the lower Ax electromagnet 16 disposed therebelow. The armature disc 14 is attracted upward by the upper Ax electromagnet 12 and downward by the lower Ax electromagnet 16, so that the shaft core rod 20 can be magnetically levitated in the axial direction (thrust direction) and supported in space in a non-contact manner.

The Ax sensor 17 and the Ax sensor target 15 are elements that detect axial displacement of the shaft core rod 20, and the sensors are each configured with, for example, a coil. The method for detecting the displacement is the same as that of the upper Ra sensor 6 described above.

As described above, the magnetic bearing 1 of the present embodiment is a so-called 5-axis control magnetic bearing device that holds the shaft core rod 20 in the radial direction by means of the radial magnetic bearing device while holding the shaft core rod 20 in the axial direction by means of the axial magnetic bearing device, and rotates the shaft core rod 20 about the axis thereof.

Positional Relationship Between Lower Ra Electromagnetic Target 27 and Lower Ra Sensor Target 29

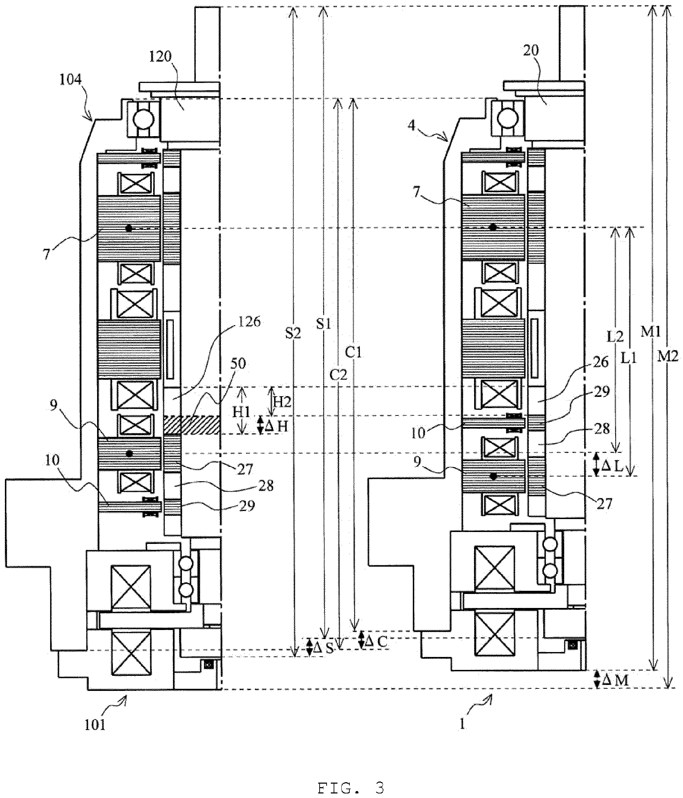

The present embodiment will be described specifically with reference to FIG. 3.

FIG. 3 is a structural comparison diagram that compares the structure of the magnetic bearing 1 of the present embodiment with the structure of the magnetic bearing 101 of the prior art to explain the magnetic bearing 1 of the present embodiment.

As described above, in the present embodiment, the arrangement of the lower Ra sensor target 29 and the lower Ra electromagnetic target 27 is different from that described in the prior art (the order of arrangement is reversed).

That is, of the parts fixed to the shaft core rod 20, the parts that are fixed below the third spacer 26 (at the outlet port 1006 side) are arranged from top to bottom (i.e., from the inlet port 1004 side toward the outlet port 1006 side), meaning that the lower Ra sensor target 29, the fourth spacer 28, and the lower Ra electromagnetic target 27 are arranged in this order.

Similarly, the lower Ra electromagnet 9 that is paired with the lower Ra electromagnetic target 27 and the lower Ra sensor 10 that is paired with the lower Ra sensor target 29 are also arranged in the reverse order to the order of arrangement of the parts fixed to the shaft core rod 120 of the prior art.

According to this configuration, the height of the third spacer 26 can be made shorter (lower) than the height of the third spacer 126 of the prior art by an elimination part 50 (ΔH = H1 - H2), the hatched part shown in FIG. 3. Note that the axial height of the third spacer 126 of the prior art is H1 and the axial height of the third spacer 26 of the present embodiment is H2.

Specifically, in the present embodiment, the third spacer 26 can be configured with laminated steel plates, and the height (axial length) of the third spacer 26 can be reduced by reducing the number of laminated steel plates to be layered, by the elimination part 50.

Since the elimination part 50 can be removed from the third spacer 126 of the prior art, in the present embodiment each of the following dimensions (A) to (C) can be reduced by ΔH (the elimination part 50).
(A) Height M (M2) of the magnetic bearing 1 can be reduced by ΔM (= M2 - M1 = ΔH).
   Note that the axial height of the magnetic bearing 101 of the prior art is M2 and the axial height of the magnetic bearing 1 of the present embodiment is M1.
(B) Height S (S2) of the shaft core rod 20 can be reduced by ΔS (= S2 - S1 = ΔH).
   Note that the axial height of the shaft core rod 120 of the prior art is S2 and the axial height of the shaft core rod 20 of the present embodiment is S1.
(C) Height C (C2) of the stator column 4 can be reduced by ΔC (= C2 - C1 = ΔH).
   Note that the axial height of the stator column 104 of the prior art is C2 and the axial height of the stator column 4 of the present embodiment is C1.

Since the dimensions of (A) to (C) described above are reduced by the elimination part 50 (ΔH) in this manner, the overall height (T) of the vacuum pump 1000 can be reduced.

As described above, in the embodiment of the present invention, the height/length (FIG. 1; S) of the shaft core rod 20 can be reduced by simply changing the positional relationship between the lower Ra electromagnetic target 27 (paired with the lower Ra electromagnet 9) and the lower Ra sensor target 29 (paired with the lower Ra sensor 10), that is, without changing the arrangement of the other components.

Since the height of the shaft core rod 20 can be reduced, the height of the magnetic bearing 1 (FIG. 1; M) can be reduced, and as a result the overall height of the vacuum pump 1000 (FIG. 1; T) can be reduced.

Specifically, since the height of the magnetic bearing 1 can be reduced without lowering the support capability of the magnetic bearing 1, the height of the stator column 4 enclosing the magnetic bearing 1, and the overall height of the vacuum pump 1000, can be reduced.

Lowering the overall height of the vacuum pump 1000 eliminates the need for a part of the material cost related to the reduced part of the vacuum pump 1000, thereby realizing cost reduction.

In addition, making the shaft core rod 20 short improves the natural frequency. Thus, the shaft core rod 20 can be rotated at a higher speed.

Here, the longer a span (distance) between the upper Ra electromagnet 7 and the lower Ra electromagnet 9, the higher the support capability of the magnetic bearing 1 becomes. Hereinafter, the "span between the upper Ra electromagnet 7 and the lower Ra electromagnet 9" is described as a "span of the magnetic bearing".

In the present embodiment in which the positional relationship between the lower Ra electromagnetic target 27 and the lower Ra sensor target 29 is changed, the span (L1) of the magnetic bearing 1 is longer than the span (L2) of the magnetic bearing 101 of the prior art by ΔL (= L1 - L2), as shown in FIG. 3.

In this manner, in the present embodiment, the span (distance) between the upper Ra electromagnet 7 and the lower Ra electromagnet 9 can be made long.

Consequently, the inclination control capability of the shaft core rod 20 (rotating portion) can be improved.

Alternatively, the height of the magnetic bearing 1 can be reduced more by further reducing the thickness (axial dimensions) of the third spacer 26 by the increased amount of the span (ΔL) without changing the inclination control capability of the shaft core rod 20 (rotating portion).

### Shield Structure

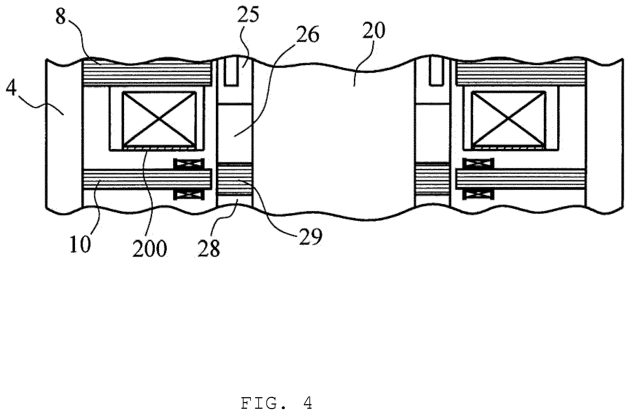

FIG. 4 is a diagram showing an example of a schematic configuration of a shield structure according to a modification of the present invention.

As shown in FIG. 4, the shield structure may be inserted between the stator-side motor 8 and the lower Ra sensor 10.

More specifically, a shield plate 200 is disposed as the shield structure, on a surface of the stator-side motor 8 that faces the lower Ra sensor 10 in a coil bobbin.

Any of the following configurations (1) to (3) is preferable as a specific example of the shield plate 200.
(1) Provide a laminated steel plate for blocking the magnetic field.
(2) In addition to the laminated steel plate (1) for blocking the magnetic field and in order to block the electrical field, place a lead wire (grounding wire) on the laminated steel plate (1) at the side facing the lower Ra sensor 10 so as to connect the lead wire to a copper plate and the ground.
(3) In addition to the laminated steel plate (1), the copper plate, and the grounding wire (2), dispose insulator films (insulating papers) to have the laminated steel plate (1), the copper plate, and the grounding earth (2) therebetween.

According to any one of the configurations (1) to (3) described above, even if magnetic or electrical noise is generated due to the configuration in which the lower Ra sensor 10 approaches the stator-side motor 8, the lower Ra sensor 10 can be protected by the shield plate 200 so as not to be hampered by the magnetic or electrical noise.

According to the present embodiment described above, although the third spacer 26 is made of a laminated steel plate, the configuration of the third spacer 26 is not limited thereto.

For example, the third spacer 26 may be made of a metal such as stainless steel. In this case, the third spacer 26 may be shortened to a desired length by cutting the metal by the elimination part 50.

Furthermore, the first spacer 22, the second spacer 24, the third spacer 26, and the fourth spacer 28 may all be composed of laminated steel plates.

In addition, the second spacer 24, the shaft-side motor 25, and the third spacer 26 may be integrated.

The embodiment of the present invention and each of the modifications of the present invention may be combined as needed.

Various modifications can be made to the present invention without departing from the spirit of the present invention, and it goes without saying that the present invention extends to such modifications.

- 1: Magnetic bearing
- 2: Shaft assembly
- 3: Stator assembly
- 4: Stator column
- 5: Upper protective bearing
- 6: Upper Ra sensor
- 7: Upper Ra electromagnet
- 8: Stator-side motor
- 9: Lower Ra electromagnet
- 10: Lower Ra sensor
- 11: Lower protective bearing
- 12: Upper Ax electromagnet
- 13: Ax spacer
- 14: Armature disc
- 15: Ax sensor target
- 16: Lower Ax electromagnet
- 17: Ax sensor
- 20: Shaft core rod
- 21: Upper Ra sensor target
- 22: First spacer
- 23: Upper Ra electromagnetic target
- 24: Second spacer
- 25: Shaft-side motor
- 26: Third spacer
- 27: Lower Ra electromagnetic target
- 28: Fourth spacer
- 29: Lower Ra sensor target
- 30: Holder
- 50: Elimination part
- 101: Magnetic bearing (prior art)
- 120: Shaft core rod (prior art)
- 126: Third spacer (prior art)
- 200: Shield plate
- 1000: Vacuum pump
- 1002: Casing
- 1003: Base
- 1004: Inlet port
- 1005: Flange portion
- 1006: Outlet port
- 1008: Rotor
- 1009: Rotor blades
- 1015: Stator blades
- 1016: Thread groove spacer
- 1017: Spacer

## Claims

1. A vacuum pump, comprising:
a housing in which an inlet port and an outlet port are formed;
a shaft enclosed in the housing;
a magnetic bearing portion that is composed of a radial electromagnetic target fixed at a predetermined position on the shaft, a radial electromagnet facing the radial electromagnetic target with a predetermined gap therebetween, a radial sensor target fixed at a predetermined position on the shaft and a radial sensor facing the radial sensor target with a predetermined gap therebetween, and rotatably supports the shaft;
a motor that is composed of a shaft-side motor portion fixed at a predetermined position on the shaft and a housing-side motor portion facing the shaft-side motor portion with a predetermined gap therebetween, and rotates the shaft; and
a rotating portion disposed on the shaft and rotated by the motor together with the shaft, wherein
the vacuum pump transfers a gas sucked from the inlet port to the outlet port by rotating the rotating portion at a high speed, and
the radial sensor target and the radial electromagnetic target are arranged in this order from the inlet port side toward the outlet port side of the shaft, at the outlet port side of the magnetic bearing portion relative to a position where the shaft-side motor portion is disposed.

2. The vacuum pump according to claim 1, wherein
the magnetic bearing portion includes a first spacer fixed on the inlet port side of the radial sensor target and a second spacer fixed between the radial sensor target and the radial electromagnetic target.

3. The vacuum pump according to claim 2, wherein
at least either of the first spacer or the second spacer is formed of a laminated steel plate.

4. The vacuum pump according to at least any one of claims 1 to 3, wherein
the motor has a shield structure at a side of the housing-side motor portion so as to face the radial sensor.

5. The vacuum pump according to at least any one of claims 1 to 4, wherein
the radial sensor is an inductance displacement sensor.

6. A magnetic bearing portion provided in the vacuum pump described in at least any one of claims 1 to 5.

7. A shaft provided in the vacuum pump described in at least any one of claims 1 to 5.
